Europäisches Patentamt

European Patent Office

Office européen des brevets

(11) Veröffentlichungsnummer: **0 119 589**
**A2**

## EUROPÄISCHE PATENTANMELDUNG

(21) Anmeldenummer: 84102770.9

(22) Anmeldetag: 14.03.84

(51) Int. Cl.³: **H 04 N 7/08**

(30) Priorität: 17.03.83 DE 3309566

(43) Veröffentlichungstag der Anmeldung: 26.09.84
Patentblatt 84/39

(84) Benannte Vertragsstaaten: **AT FR GB IT**

(71) Anmelder: **International Standard Electric Corporation,
320 Park Avenue, New York New York 10022 (US)**

(72) Erfinder: **Immendörfer, Manfred, Dr., Grabenstrasse 5,
D-7257 Ditzingen 3 (DE)**
Erfinder: **Kopp, Dieter, Münchinger Strasse 10,
D-7251 Hemmingen (DE)**
Erfinder: **Thierer, Gebhard, Dr., Breslauer Strasse 1,
D-7257 Ditzingen 1 (DE)**

(74) Vertreter: **Villinger, Bernhard, Dipl.-Ing. et al, Standard
Elektrik Lorenz AG Patent- und Lizenzwesen
Postfach 300 929 Kurze Strasse 8,
D-7000 Stuttgart 30 (DE)**

(54) Bedienungseinrichtung für ein Teilnehmergerät eines Informationssystems.

(57) Mit der Bedienungseinrichtung (6) eines Bildschirmtext
(Btx)-Endgerätes, die herkömmlicherweise eine Tastatur aufweist, gibt der Benutzer Befehle ein, die in einem dem Fernsehgerät (2) zugeordneten Decoder (5) umgesetzt und über
das Fernsprechnetz (4) an eine zentrale Datenbank übermittelt
werden, um dort abgespeicherte Information abzurufen und
auf dem Teilnehmer-Fernsehgerät (2) darzustellen. Die Bedienung des Btx-Endgerätes wird dadurch erleichtert, daß die Bedienungseinrichtung (6) eine Spracherkennungsschaltung
enthält, in der über ein Mikrophon empfangene Sprachsignale
ausgewertet werden. In einer Codierschaltung werden die ausgewerteten Sprachsignale in Steuerzeichen für den Decoder
(5) umgewandelt.

0119589

M.Immendörfer et al 1-1-1

## Bedienungseinrichtung für ein Teilnehmergerät eines Informationssystems

Die Erfindung betrifft eine Bedienungseinrichtung für ein Teilnehmergerät eines Informationssystems, mittels derer ein Decoder angesteuert wird, durch den über das Fernsprechnetz von einer zentralen Datenbank Informationen abgerufen und auf dem Bildschirm des Teilnehmergerätes dargestellt werden.

Eine solche Bedienungseinrichtung kann z.B. in Systemen zur automatischen Fahrplanauskunft, zur automatischen Fernsprech-Rufnummernauskunft, zur allgemeinen Auskunft über beliebige Fachgebiete und für Bildschirmtextsysteme verwendet werden. Eine Bedienungseinrichtung für Bildschirmtext-Teilnehmergeräte enthält üblicherweise eine Tastatur. Im einfachsten Falle enthält sie Tasten für die Ziffern 0 bis 9 und für die Sonderzeichen * und #. Sie kann auch eine erweiterte alphanumerische Tastatur oder eine alphanumerische Volltastatur, ähnlich der für Datenterminals verwendeten, aufweisen. Die Bedienungseinrichtung ist entweder über ein Kabel mit dem Bildschirmtext-Fernsehgerät verbunden, oder in der Art einer Fernbedienungseinrichtung für Fernsehgeräte mit einem Infrarot- oder Ultraschall-Sender versehen. In allen Fällen muß zur Bedienung eine Tastatur betätigt werden.

ZT/P1-Bk/Bl
16.03.1983

M.Immendörfer et al 1-1-1

Der Erfindung liegt die Aufgabe zugrunde, die Bedienung des Teilnehmergerätes des Informationssystems zu erleichtern.

Diese Aufgabe wird mit einer Bedienungseinrichtung der eingangs genannten Art erfindungsgemäß dadurch gelöst, daß sie eine Spracherkennungsschaltung, in der über ein Mikrophon empfangene Sprachsignale ausgewertet werden, und eine Codierschaltung, in der die ausgewerteten Sprachsignale in Steuersignale für den Decoder umgewandelt werden, aufweist.

Der Vorteil der Erfindung liegt insbesondere darin, daß mit ihr ein solches Teilnehmergerät ohne weiteres auch von Behinderten oder von Personen benutzt werden kann, die z.B. durch eine Verletzung an dem Einsatz ihrer Hände vorübergehend gehindert sind.

Vorteilhafte Weiterbildungen sind in den Unteransprüchen gekennzeichnet.

Ein Ausführungsbeispiel der Erfindung wird im folgenden anhand der Zeichnung erläutert. Es zeigen:

Figur 1     ein Bildschirmtext-Teilnehmergerät in schema-
            tischer Darstellung, und

Figur 2     eine erfindungsgemäße Bedienungseinrichtung
            für das Bildschirmtext-Teilnehmergerät nach
            Figur 1.

3 0119589

M.Immendörfer et al 1-1-1

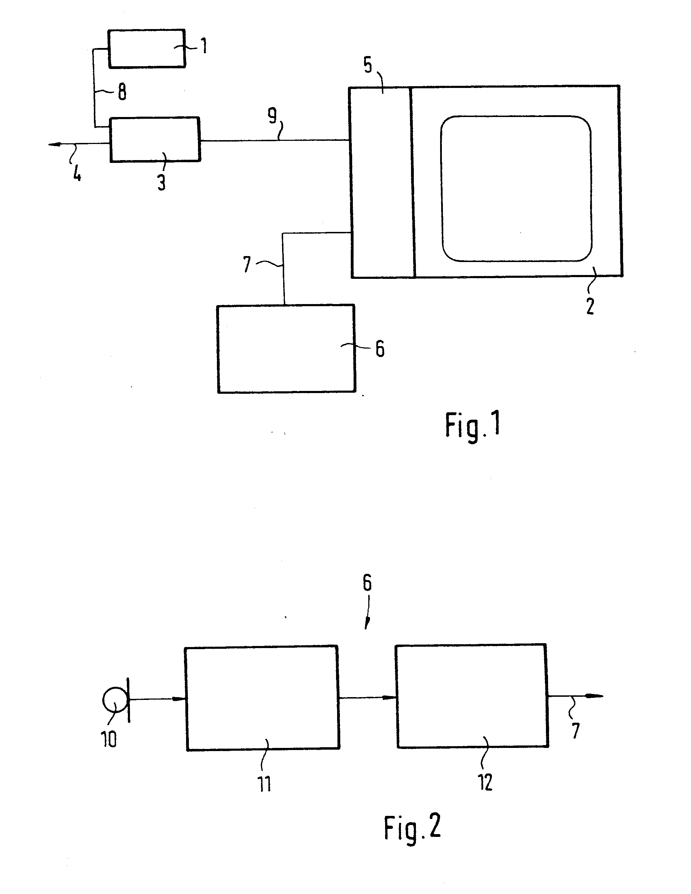

Ein Bildschirmtext-Teilnehmergerät besteht aus
einem Fernsehgerät 2, das über eine
Anschlußeinheit 3 mit einer Teilnehmer-Anschlußleitung 4
und damit mit dem öffentlichen Fernsprechnetz verbunden
ist (Figur 1). Die Anschlußeinheit 3 enthält im wesentlichen einen Modem, der eine Datenübertragung über das
Fernsprechnetz ermöglicht, und eine Umschalteeinrichtung,
durch die entweder der Telefonapparat 1 oder das Fernsehgerät 2 mit der Anschlußleitung 4 verbunden werden.

Der Telefonapparat 1 ist mit einem in der Zeichnung nur
schematisch dargestellten Bildschirmtext-Decoder 5 verbunden, der die über die Teilnehmer-Anschlußleitung 4 ankommenden Daten so aufbereitet, daß sie auf dem Fernsehbildschirm dargestellt werden können. Der Bildschirmtext-
Decoder 5 decodiert auch die von dem Benutzer über eine
Bedienungseinrichtung 6 eingegebenen Steuersignale so,
daß die gewünschten Informationen von der zentralen Bild-
schirmtext-Datenbank abgerufen werden können. Der Informationsabruf durch den Benutzer erfolgt herkömmlicherweise durch Eingabe von Steuersignalen über die Tastatur
der Bedienungseinrichtung. Eine in der Zeichnung dargestellte Leitung 7, die die Bedienungseinrichtung 6 mit
dem Bildschirmtext-Decoder 5 verbindet, kann
auch durch eine Infrarot- oder Ultraschall-Verbindung
ersetzt werden. Leitungen 8 und 9 verbinden den Telefonapparat 1 bzw. das Fernsehgerät 2 mit der Anschlußeinrichtung 3.

M.Immendörfer et al 1-1-1

Eine erfindungsgemäße Bedienungseinrichtung 6 (Figur 2) enthält ein Mikrophon 10, eine Spracherkennungsschaltung 11 und eine Codierschaltung 12. Die über das Mikrophon 10 empfangenen Benutzer-Sprachsignale werden in der Spracherkennungsschaltung 11, die von bekannter Bauart ist, ausgewertet. Eine solche Spracherkennungsschaltung 11 kann ein Vokabular von bis zu einigen hundert Worten verarbeiten.In einem Ausführungsbeispiel ist eine isolierte Worterkennungseinheit mit einem Vokabular von einhundert Worten verwendet worden, die darüberhinaus die Möglichkeit besitzt, durch eine syntaxgesteuerte Analyse eine komplette Wortfolge, die aufeinanderfolgend gesprochen wird, zu verarbeiten.

Nach Eingabe einer sprachlichen Äußerung über das Mikrophon 10 werden in der Spracherkennungsschaltung entsprechende Ausgangssignale erzeugt, die an die Codierschaltung 12 weitergeleitet werden. Dort werden sie in eine Signalfolge umcodiert, die zum Ansteuern des Bildschirmtext-Decoders 5 geeignet ist. Die Codierschaltung 12 enthält eine Mikroprozessoreinheit, deren Ausgabegeschwindigkeit an die für den Abruf von Bildschirmtext-Informationen erforderliche Übertragungsgeschwindigkeit von 75 Baud angepaßt ist. Die von der Codierschaltung 12 ausgegebenen Steuersignale sind an den Signalpegel des Decoders 5 angepaßt.

Ein von dem Benutzer gesprochenes Wort oder Wortfolge wird somit in der erfindungsgemäßen Bedienungseinrichtung 6 selbsttätig in Steuersignale für den Bildschirmtext-Decoder 5 umgesetzt. Es können dabei folgende

5            0119589

M.Immendörfer et al 1-1-1

Steuerzeichen erzeugt und damit folgende Funktionen
für den Informationsabruf ausgelöst werden.

- Die 12 Basissteuerzeichen (Ziffern 0 bis 9, Sonderzeichen * und #) werden durch entsprechende sprachliche Äußerungen oder Worte ausgelöst.

- Durch Kombination der Basissteuerzeichen lassen sich
  bestimmte übergeordnete Funktionen des Bildschirmtext-
  Dienstes auslösen. Hierfür werden durch den Benutzer
  der erfindungsgemäßen Bedienungseinrichtung sprachliche Kommandos festgelegt, die die übergeordnete Funktion
  auslösen (z.B. "Übersichtsseite" für *0#, "Bildschirm-
  text-Ende" für *9#).

- Bei dem Bildschirmtext-Dienst (Abkürzung BTX) gelangt
  der Benutzer zu der gewünschten Information entweder
  über das Suchbaumverfahren - bei dem man schrittweise
  durch umblättern der sogenannten Bildschirmtext-Seiten
  vorzugehen hat - oder durch die sogenannte Direktwahl,
  bei der die Information direkt durch die Angabe
  " * Seitennummer # " angewählt wird. In beiden Fällen
  sind bei bekannten Bedienungseinrichtungen im Schnitt
  etwa acht bis zehn Zeichen über eine Tastatur einzugeben. Dagegen löst in der erfindungsgemäßen Bedienungseinrichtung eine sprachliche Äußerung, die die gewünschte Information eindeutig charakterisiert, alle
  Steuerzeichen selbsttätig aus, die zum Durchlaufen des
  Suchbaums bzw. zur Direktwahl erforderlich sind.

6    011959 0

M.Immendörfer et al 1-1-1

- Darüberhinaus kann durch die erfindungsgemäße Bedienungseinrichtung nach erfolgter Direktwahl selbsttätig ein Weiterblättern der Bildschirmtext-Seiten bis zur endgültig gewünschten Informationsseite (auf unterster Bildschirmtext-Hierarchieebene) ausgelöst werden. Ein Leistungsmerkmal das bei der herkömmlichen Bedienungseinrichtung nur durch aufeinanderfolgende manuelle Tastatureingabe erreichbar ist.

- Außerdem können Informationen, die durch Angabe eines Begriffes nicht eindeutig gekennzeichnet sind, dadurch abgerufen werden, daß mit Hilfe einer syntaxgesteuerten Analyse eine Wortfolge verarbeitet wird, die die Informationen eindeutig charakterisiert (z.B. "Reisewetter Italien", "Reisewetter Schweiz", ..., oder "Vergleichstest Farbfernseher", "Vergleichstest Kühlschränke", ...).

- Es kann auch eine alphanumerische Tastatur mit erweitertem Bildschirmtext-Zeichenvorrat durch die erfindungsgemäße Bedienungseinrichtung nachgebildet werden.

- Ein persönliches Kennwort, das aus einer mehrstelligen Ziffer besteht und das bei Beginn eines Bildschirmtext-Aufrufs zur Identifizierung der Teilnehmernummer vorgeschrieben ist, wird bei der erfindungsgemäßen Bedienungseinrichtung ebenfalls in Form einer sprachlichen Äußerung eingegeben.

- Auch ein Codewort, das zur Identifizierung des Sprechers in den Fällen dient, in denen die Information nur von ihm persönlich abgerufen werden kann (z.B. der Stand eines

0119589

M.Immendörfer et al 1-1-1

Bankkontos) oder in denen nur ein Teil der Bildschirm-text-Information abrufbar ist (z.B. eine für Kinder vorgesehene Einschränkung), kann mit der erfindungsgemäßen Bedienungseinrichtung eingegeben werden.

Bei der erfindungsgemäßen Bedienungseinrichtung kann die gewünschte Bildschirmtext-Information und die für deren Abruf vorgesehene sprachliche Wortform oder Wortfolge von dem Benutzer frei vorgegeben und bei Bedarf beliebig geändert werden. Die dafür erforderlichen Speichereinrich-tungen sind in der Spracherkennungsschaltung 11 und in der Codierschaltung 12 enthalten. Für die einmalige Zeicheneingabe der gewünschten Bildschirmtext-Informationen steht an der Codierschaltung 12 eine Tastatur zur Verfügung. Die Zuordnung zu einer sprachlichen Äußerung erfolgt in der sog . Trainingsphase der Spracherkennungsschaltung 11. Die jeweiligen Daten werden in der Speichereinrichtung abgelegt und können beim Betrieb des Gerätes jederzeit verwendet werden.

Die erfindungsgemäße spracherkennende Bildschirmtext-Be-dienungseinrichtung weist einen hohen Benutzungskomfort auf, zur Eingabe von Benutzerbefehlen ist keinerlei manuelle Betätigung mehr erforderlich. Ein besonderer Vorteil liegt darin, daß durch Eingabe von Begriffen bestimmte Informationen, die vom Benutzer häufig gewünscht werden, direkt angewählt werden können. Dadurch werden die bisherigen Nachteile beim Abruf derartiger Informationen vermieden: entweder ein langwieriges Suchbaumverfahren oder eine mehrstellige Zifferneingabe für die Direktwahl

8

0119589

M.Immendörfer et al 1-1-1

von Schlagwörtern, wobei diese Ziffern im allgemeinen nachgeschlagen werden müssen. Die Information kann durch einen vom Benutzer vorgegebenen und leicht zu merkenden Begriff abgerufen werden. Die zeitsparende und benutzerfreundliche Funktion der erfindungsgemäßen Bedienungseinrichtung erleichtert die Bedienung des Bildschirmtext-Teilnehmergerätes wesentlich.

0119589

M.Immendörfer - D.Kopp - G.Thierer 1-1-1


Patentansprüche


1. Bedienungseinrichtung für ein Teilnehmergerät eines Informationssystems, mittels derer ein Decoder (5) angesteuert wird, durch den über das Fernsprechnetz (4) von einer zentralen Datenbank Informationen abgerufen und auf dem Bildschirm des Teilnehmergerätes (2) dargestellt werden, dadurch gekenn- zeichnet, daß sie eine Spracherkennungsschaltung (11), in der über ein Mikrophon (10) empfangene Sprachsignale ausgewertet werden, und eine Codierschaltung (12), in der die ausgewerteten Sprachsignale in Steuerzeichen für den Bildschirmtext-Decoder (5) umgewandelt werden, aufweist.


2. Bedienungseinrichtung nach Anspruch 1, dadurch gekennzeichnet, daß die Spracherkennungsschaltung (11) mit Speichereinrichtungen für Sprachsignale versehen ist, die nach Umcodierung in Speichereinrichtungen der Codierschaltung (12) den Basissteuerzeichen (*, #, 0, 1, ..., 9) für den Decoder (5) entsprechen.

ZT/P1-Bk/Bl
16.03.1983

M.Immendörfer et al 1-1-1

3. Bedienungseinrichtung nach Anspruch 1 oder 2, dadurch gekennzeichnet, daß als Sprachsignale in die Speichereinrichtung Worte oder syntaktisch definierte Wortfolgen eingebbar sind.

4. Bedienungseinrichtung nach Anspruch 2, dadurch gekennzeichnet, daß die Worte oder Wortfolgen in der Codierschaltung (12) in einzelne Basissteuerzeichen oder in eine Folge von Basissteuerzeichen (*, #, 0, 1, ..., 9) umgesetzt werden, durch die Bildschirmtext-Steuervorgänge durchgeführt werden.

5. Bedienungseinrichtung nach einem der vorhergehenden Ansprüche, dadurch gekennzeichnet, daß die Sprachsignale und die ihnen zugeordneten Steuerzeichen von dem Benutzer in vorgebbarer Form und Zuordnung in die Spracherkennungsschaltung (11) und in die Codierschaltung (12) eingebbar sind.

6. Bedienungseinrichtung nach einem der vorhergehenden Ansprüche, dadurch gekennzeichnet, daß in die Spracherkennungsschaltung (11) und in die Codierschaltung (12) Sprachsignale eingebbar sind, die den mit einer alphanumerischen Tastatur erzeugten Steuerzeichen entsprechen.

7. Bedienungseinrichtung nach einem der vorhergehenden Ansprüche, dadurch gekennzeichnet, daß durch die Spracherkennungsschaltung (11) eine Teilnehmeridentifizierung durchgeführt wird.

8. Bedienungseinrichtung nach einem der vorhergehenden Ansprüche, dadurch gekennzeichnet, daß sie für ein Bildschirmtext-Teilnehmergerät verwendet wird.

1/1

0119589

Fig.1

Fig.2

M.Immendörfer 1
2. 3. 83